# EUROPÄISCHE PATENTSCHRIFT

(11) **EP 3 345 363 B1**
(45) Veröffentlichungstag und Bekanntmachung des Hinweises auf die Patenterteilung: **01.03.2023**
(21) Anmeldenummer: 16735656.7
(22) Anmeldetag: 05.07.2016
(51) Int. Cl.: B62D 15/02, H04L 1/22, G08G 1/14, G08G 1/0968

(54) **KRAFTFAHRZEUG UND PARKPLATZ FÜR KRAFTFAHRZEUGE SOWIE KOMMUNIKATIONSSYSTEM**
MOTOR VEHICLE AND PARKING SPACE FOR MOTOR VEHICLES AND COMMUNICATION SYSTEM
VÉHICULE À MOTEUR ET PARC DE STATIONNEMENT POUR VÉHICULES À MOTEUR ET SYSTÈME DE COMMUNICATION

(30) Priorität: 03.09.2015 DE 102015216900
(43) Veröffentlichungstag der Anmeldung: 11.07.2018
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2016/065831
(87) Internationale Veröffentlichungsnummer: WO 2017/036637

(56) Entgegenhaltungen:
- EP-A1- 2 308 724
- DE-A1-102008 060 231
- DE-A1-102008 061 304
- DE-A1-102009 015 513
- DE-A1-102010 038 640
- DE-A1-102012 109 620
- DE-A1-102012 218 172
- DE-A1-102012 222 562

## Beschreibung

Die Erfindung betrifft ein Kraftfahrzeug, einen Parkplatz für Kraftfahrzeuge sowie ein Kommunikationssystem.

### Stand der Technik

Die Offenlegungsschrift DE 10 2012 222 562 A1 zeigt ein System für bewirtschaftete Parkflächen zur Überführung eines Fahrzeugs von einer Startposition in eine Zielposition. Bei dieser Überführung ist eine Kommunikation zum Fahrzeug notwendig, um zum Beispiel Fahrbefehle, die das Fahrzeug ausführen soll, an das Fahrzeug zu übermitteln.

Allgemein ist bei einem vollautomatisierten (autonomen) so genannten Valet Parking eine Kommunikation zum Fahrzeug notwendig. Ein so genanntes voll automatisiertes Valet Parking bezeichnet einen automatischen Parkvorgang, innerhalb welchem das Fahrzeug automatisch ein- respektive ausparkt, ohne dass ein Fahrer das Fahrzeug zur entsprechenden Parkposition fahren muss.

Beim so genannten vollautomatisierten Valet Parking gibt es mehrere Möglichkeiten zur Durchführung. Zum Beispiel ist vorgesehen, dass das Fahrzeug ferngesteuert wird. Zum Beispiel ist vorgesehen, dass das Fahrzeug autonom fährt. Zum Beispiel ist eine Mischform der beiden vorgestehend genannten Ausführungsformen vorgesehen. Das heißt, dass das Fahrzeug zum Beispiel eine Teilstrecke ferngesteuert wird und eine weitere Teilstrecke autonom fährt.

Zur Durchführung des vollautomatisierten Valet Parkings, also zur Durchführung des automatischen Parkvorgangs, ist es notwendig, dem Fahrzeug zum Beispiel Fahrbefehle zu übermitteln oder eine digitale Karte des Parkplatzes, so dass das Fahrzeug basierend auf der digitalen Karte innerhalb des Parkplatzes autonom navigieren kann.

Die Offenlegungsschrift DE 10 2008 061 304 A1 offenbart eine Kommunikationseinrichtung für ein Fahrzeug zum drahtlosen Übertragen von fahrzeugrelevanten Daten an ein anderes Fahrzeug oder an eine Infrastruktur.

### Offenbarung der Erfindung

Die der Erfindung zugrunde liegende Aufgabe ist darin zu sehen, ein effizientes Konzept bereitzustellen, welches eine effiziente Kommunikation zwischen einem Kraftfahrzeug und einem Parkplatz ermöglicht.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Kraftfahrzeug bereitgestellt, umfassend:
- ein redundant ausgebildetes Kommunikationssystem, das
- eine erste Kommunikationseinrichtung zum Kommunizieren über ein erstes drahtloses Kommunikationsnetzwerk,
- eine zweite Kommunikationseinrichtung zum Kommunizieren über ein zweites drahtloses Kommunikationsnetzwerk und
- eine Steuerungseinrichtung zum redundanten Betreiben der ersten Kommunikationseinrichtung und der zweiten Kommunikationseinrichtung aufweist.

Nach einem anderen Aspekt wird ein Parkplatz für Kraftfahrzeuge bereitgestellt, umfassend:
- ein redundant ausgebildetes Kommunikationssystem, das
- eine erste Kommunikationseinrichtung zum Kommunizieren über ein erstes drahtloses Kommunikationsnetzwerk,
- eine zweite Kommunikationseinrichtung zum Kommunizieren über ein zweites drahtloses Kommunikationsnetzwerk und
- eine Steuerungseinrichtung zum redundanten Betreiben der ersten Kommunikationseinrichtung und der zweiten Kommunikationseinrichtung aufweist.

Gemäß einem weiteren Aspekt wird ein Kommunikationssystem bereitgestellt, umfassend:
- eine erste Kommunikationseinrichtung zum Kommunizieren über ein erstes drahtloses Kommunikationsnetzwerk,
- eine zweite Kommunikationseinrichtung zum Kommunizieren über ein zweites drahtloses Kommunikationsnetzwerk und
- eine Steuerungseinrichtung zum redundanten Betreiben der ersten Kommunikationseinrichtung und der zweiten Kommunikationseinrichtung.

Das Kommunikationssystem ist nach einer Ausführungsform das redundant ausgebildete Kommunikationssystem des Kraftfahrzeugs und des Parkplatzes.

Merkmale für das redundant ausgebildete Kommunikationssystem des Kraftfahrzeugs respektive des Parkplatzes gelten analog für das Kommunikationssystem.

Die Erfindung umfasst also insbesondere und unter anderem den Gedanken, eine Redundanz in der Kommunikation zwischen dem Kraftfahrzeug und dem Parkplatz vorzusehen, insofern zwei Kommunikationseinrichtungen vorgesehen sind, die jeweils über ein drahtloses Kommunikationsnetzwerk kommunizieren können. Sofern eine der beiden Kommunikationseinrichtungen ausfallen sollte oder eine Fehlfunktion aufweisen sollte, kann respektive wird die andere der beiden Kommunikationseinrichtungen für die Kommunikation verwendet werden. Dadurch wird also insbesondere der technische Vorteil bewirkt, dass eine effiziente Kommunikation zwischen einem Parkplatz und einem Kraftfahrzeug ermöglicht ist.

Die Erfindung umfasst also insbesondere und unter anderem den Gedanken, das Kraftfahrzeug respektive den Parkplatz mit einem redundant ausgebildeten Kommunikationssystem zu versehen. Aufgrund des redundant ausgebildeten Kommunikationssystems kann eine zuverlässige und robuste Kommunikation zwischen Kraftfahrzeug und Parkplatz gewährleistet werden. Dadurch wird also insbesondere der technische Vorteil bewirkt, dass eine effiziente Kommunikation zwischen dem Kraftfahrzeug und dem Parkplatz durchgeführt werden kann.

Wenn vorstehend und nachfolgend das Kommunikationssystem, insbesondere das redundant ausgebildete Kommunikationssystem, im Zusammenhang mit dem Parkplatz respektive des Kraftfahrzeugs beschrieben wird, so wird angemerkt, dass die entsprechenden Kommunikationssysteme auch für sich allein jeweils offenbart sind, also ohne das Kraftfahrzeug respektive ohne den Parkplatz.

Dass das Kommunikationssystem redundant ausgebildet ist, heißt, dass bei Ausfall der ersten Kommunikationseinrichtung die zweite Kommunikationseinrichtung die Kommunikation übernehmen kann oder umgekehrt. Zum Beispiel wird bei Detektion eines Fehlers in der Kommunikationsverbindung zwischen Kraftfahrzeug und Parkplatz über das erste drahtlose Kommunikationsnetzwerk auf die zweite Kommunikationseinrichtung umgeschaltet, so dass dann die Kommunikation zwischen dem Kraftfahrzeug und dem Parkplatz über das zweite drahtlose Kommunikationsnetzwerk durchgeführt wird. Sofern es also Störungen im ersten drahtlosen Kommunikationsnetzwerk gibt, steht in vorteilhafter Weise immer noch in redundanter Weise das zweite drahtlose Kommunikationsnetzwerk zur Verfügung, um hierüber zu kommunizieren.

Ein Kommunizieren im Sinne der vorliegenden Erfindung umfasst insbesondere ein Senden respektive ein Empfangen von Daten über das entsprechende drahtlose Kommunikationsnetzwerk.

Daten umfassen zum Beispiel folgende Daten: Kartendaten einer digitalen Karte, Fahrbefehlsdaten eines oder mehrerer Fahrbefehle, die das Kraftfahrzeug ausführen soll, Positions- und/oder Geschwindigkeitsdaten von weiteren Kraftfahrzeugen respektive Personen, die sich innerhalb des Parkplatzes befinden, Solltrajektoriendaten für eine Solltrajektorie, die das Kraftfahrzeug innerhalb des Parkplatzes abfahren soll, Zielpositionsdaten einer Zielposition, die das Kraftfahrzeug anfahren soll.

Daten umfassen somit allgemein Daten, die für die Durchführung eines automatischen Parkvorgangs relevant sind. Bei einem automatischen Parkvorgang fährt das Kraftfahrzeug führerlos von einer Startposition zu einer Parkposition und stellt sich an der Parkposition ab. Bei einem automatischen Parkvorgang fährt das Kraftfahrzeug von der Parkposition zu einer Zielposition, an welcher eine Person das Kraftfahrzeug abholen oder übernehmen kann. Bei einem automatischen Parkvorgang ist vorgesehen, dass das Kraftfahrzeug autonom fährt oder ferngesteuert wird. Insbesondere ist bei einem automatischen Parkvorgang vorgesehen, dass das Kraftfahrzeug eine Teilstrecke ferngesteuert wird und eine weitere Teilstrecke autonom fährt. Das heißt also, dass im Rahmen des automatischen Parkvorgangs das Kraftfahrzeug führerlos innerhalb des Parkplatzes fährt. "Führerlos" umfasst also "autonom" und/oder "ferngesteuert".

Ein drahtloses Kommunikationsnetzwerk, also das erste respektive das zweite Kommunikationsnetzwerk, umfasst nach ein WLAN-Kommunikationsnetzwerk und ein Mobilfunknetzwerk.

Nach einer Ausführungsform wird respektive ist eine Kommunikation über das Kommunikationsnetzwerk, also über das erste respektive das zweite Kommunikationsnetzwerk, verschlüsselt.

Die Formulierung "respektive" umfasst insbesondere die Formulierung "und/oder".

Ein Parkplatz im Sinne der vorliegenden Erfindung dient als Abstellfläche für Kraftfahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Die Parkstände oder Stellplätze sind also Parkflächen. Der Parkplatz ist nach einer Ausführungsform als ein Parkhaus ausgebildet. Der Parkplatz ist nach einer weiteren Ausführungsform als eine Parkgarage ausgebildet. Die Parkflächen können auch als Parkpositionen bezeichnet werden.

Das Kraftfahrzeug ist also nach einer Ausführungsform ausgebildet, einen automatischen Parkvorgang durchzuführen. Ein solches Kraftfahrzeug kann als ein AVP-Kraftfahrzeug bezeichnet werden. Hierbei steht "AVP" für "Automated Valet Parking" und kann mit automatischer Parkvorgang übersetzt werden.

Erfindungsgemäß sind das erste drahtlose Kommunikationsnetzwerk und das zweite drahtlose Kommunikationsnetzwerk zwei unterschiedliche Kommunikationsnetzwerke. Das erste drahtlose Kommunikationsnetzwerk ist ein WLAN-Kommunikationsnetzwerk und das zweite Kommunikationsnetzwerk ist ein Mobilfunknetzwerk.

Nach einer Ausführungsform ist vorgesehen, dass die erste Kommunikationseinrichtung und die zweite Kommunikationseinrichtung als voneinander getrennte Kommunikationsgeräte ausgebildet sind.

Dadurch wird insbesondere der technische Vorteil bewirkt, dass eine einfache räumliche Trennung zwischen den beiden Kommunikationseinrichtungen bewirkt werden kann. Insbesondere kann dadurch die Redundanz effizient hergestellt werden. Dadurch wird insbesondere das Risiko minimiert, dass sie einer gemeinsamen Störung unterliegen können.

Nach einer anderen Ausführungsform ist vorgesehen, dass eine der beiden Kommunikationseinrichtungen von einer Haupteinheit eines Infotainmentsystems umfasst ist.

Dadurch wird insbesondere der technische Vorteil bewirkt, dass die Haupteinheit, die auch als eine Headunit bezeichnet werden kann, effizient genutzt werden kann. Denn in der Regel umfasst diese bereits eine Kommunikationseinrichtung. Das heißt, dass in vorteilhafter Weise effizient die bereits vorhandene Kommunikationseinrichtung der Haupteinheit verwendet wird. Diese Kommunikationseinrichtung ist zum Beispiel eine Mobilfunkkommunikationseinrichtung. Es wird somit keine zusätzliche Kommunikationseinrichtung benötigt.

Gemäß einer weiteren Ausführungsform ist vorgesehen, dass eine der beiden Kommunikationseinrichtungen von einem Fahrzeugmodul zur Durchführung eines automatischen Parkvorgangs umfasst ist.

Dadurch wird insbesondere der technische Vorteil bewirkt, dass ein solches Fahrzeugmodul analog zur Headunit bereits über eine eigene Kommunikationseinrichtung verfügt. Die entsprechenden Vorteile sind analog zur Headunit.

Nach einer Ausführungsform ist vorgesehen, dass die erste Kommunikationseinrichtung und die zweite Kommunikationseinrichtung von einem gemeinsamen Kommunikationsgerät umfasst sind.

Dadurch wird insbesondere der technische Vorteil bewirkt, dass aufgrund des räumlichen Zusammenfassens der beiden Kommunikationseinrichtungen in ein gemeinsames Kommunikationsgerät ein effizienter Einbau des Kommunikationsgeräts im Kraftfahrzeug ermöglicht ist.

Bei einem gemeinsamen Kommunikationsgerät ist insbesondere vorgesehen, dass jede der beiden Kommunikationseinrichtungen eine eigene elektrische Schnittstelle für eine Spannungsversorgung aufweist. Das heißt also, dass die beiden Kommunikationseinrichtungen unabhängig voneinander funktionieren können.

Nach einer Ausführungsform ist vorgesehen, dass die erste Kommunikationseinrichtung und die zweite Kommunikationseinrichtung jeweils mehrere innerhalb des Parkplatzes räumlich verteilte Transceivereinheiten umfassen.

Dadurch wird insbesondere der technische Vorteil bewirkt, dass eine effiziente Funkabdeckung innerhalb des Parkplatzes ermöglicht ist.

Eine Transceivereinheit im Sinne der vorliegenden Erfindung umfasst insbesondere einen oder mehrere Empfänger und/oder einen oder mehrere Sender respektive zum Empfangen und zum Senden über das entsprechende Kommunikationsnetzwerk.

Nach einer Ausführungsform ist vorgesehen, dass die jeweiligen Transceivereinheiten der ersten Kommunikationseinrichtung und der zweiten Kommunikationseinrichtung zumindest teilweise jeweils als voneinander getrennte Kommunikationsgeräte ausgebildet sind.

Dadurch wird insbesondere der technische Vorteil bewirkt, dass aufgrund des räumlichen Trennens eine effiziente Redundanz bewirkt werden kann. Dadurch wird insbesondere das Risiko minimiert, dass sie einer gemeinsamen Störung unterliegen können.

Nach einer anderen Ausführungsform ist vorgesehen, dass die jeweiligen Transceivereinheiten der ersten Kommunikationseinrichtung und der zweiten Kommunikationseinrichtung zumindest teilweise jeweils als ein gemeinsames Kommunikationsgerät ausgebildet sind.

Dadurch wird insbesondere der technische Vorteil bewirkt, dass eine effiziente Montage oder Anordnung der Transceivereinheiten innerhalb des Parkplatzes ermöglicht ist.

Bei einem gemeinsamen Kommunikationsgerät ist insbesondere vorgesehen, dass jede der Transceivereinheiten eine eigene elektrische Schnittstelle für eine Spannungsversorgung aufweist. Die jeweiligen Transceivereinheiten funktionieren somit unabhängig voneinander.

Die Erfindung wird im Folgenden anhand von bevorzugten Ausführungsbeispielen näher erläutert. Hierbei zeigen
- Fig. 1: ein Kraftfahrzeug,
- Fig. 2: einen Parkplatz für Kraftfahrzeuge und
- Fig. 3: einen weiteren Parkplatz für Kraftfahrzeuge, wobei sich ein Kraftfahrzeug innerhalb des Parkplatzes befindet.

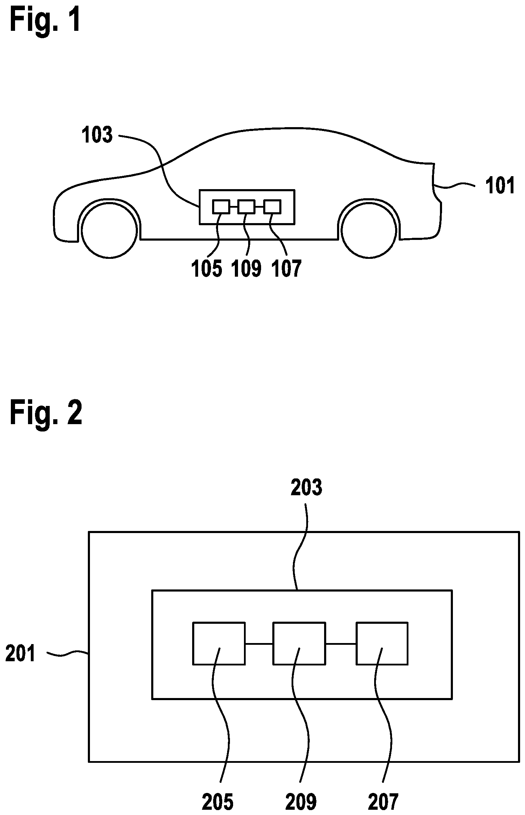

Fig. 1 zeigt ein Kraftfahrzeug 101.

Das Kraftfahrzeug 101 umfasst:
- ein redundant ausgebildetes Kommunikationssystem 103, das
- eine erste Kommunikationseinrichtung 105 zum Kommunizieren über ein erstes drahtloses Kommunikationsnetzwerk,
- eine zweite Kommunikationseinrichtung 107 zum Kommunizieren über ein zweites drahtloses Kommunikationsnetzwerk und
- eine Steuerungseinrichtung 109 zum redundanten Betreiben der ersten Kommunikationseinrichtung und der zweiten Kommunikationseinrichtung aufweist.

Fig. 2 zeigt einen Parkplatz 201 für Kraftfahrzeuge.

Der Parkplatz 201 umfasst:
- ein redundant ausgebildetes Kommunikationssystem 203, das
- eine erste Kommunikationseinrichtung 205 zum Kommunizieren über ein erstes drahtloses Kommunikationsnetzwerk,
- eine zweite Kommunikationseinrichtung 207 zum Kommunizieren über ein zweites drahtloses Kommunikationsnetzwerk und
- eine Steuerungseinrichtung 209 zum redundanten Betreiben der ersten Kommunikationseinrichtung und der zweiten Kommunikationseinrichtung aufweist.

In einer Ausführungsform ist das erste respektive das zweite Kommunikationsnetzwerk innerhalb des Parkplatzes aufgebaut.

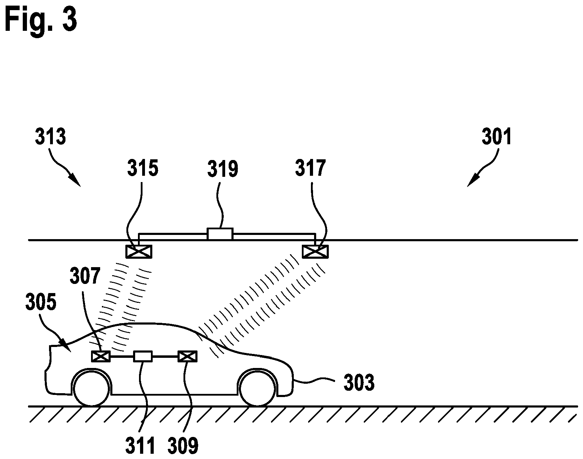

Fig. 3 zeigt einen Parkplatz 301, innerhalb welchem ein Kraftfahrzeug 303 fährt.

Das Kraftfahrzeug 303 umfasst ein redundant ausgebildetes Kommunikationssystem 305. Das redundant ausgebildete Kommunikationssystem 305 des Kraftfahrzeugs 303 umfasst eine erste Kommunikationseinrichtung 307 zur Kommunikation über ein WLAN-Kommunikationsnetzwerk. Das Kommunikationssystem 305 des Kraftfahrzeugs 303 umfasst ferner eine zweite Kommunikationseinrichtung 309 zum Kommunizieren über ein Mobilfunkkommunikationsnetzwerk.

Das Kommunikationssystem 305 des Kraftfahrzeugs 303 umfasst ferner eine Steuerungseinrichtung 311 zum redundanten Betreiben der ersten Kommunikationseinrichtung 307 und der zweiten Kommunikationseinrichtung 309.

Der Parkplatz 301 umfasst ein redundant ausgebildetes Kommunikationssystem 313. Das redundant ausgebildete Kommunikationssystem 313 des Parkplatzes 301 umfasst eine erste Kommunikationseinrichtung 315 zum Kommunizieren über das WLAN-Kommunikationsnetzwerk. Das redundant ausgebildete Kommunikationssystem 313 des Parkplatzes 301 umfasst ferner eine zweite Kommunikationseinrichtung 317 zum Kommunizieren über das Mobilfunkkommunikationsnetzwerk.

Das heißt also, dass das Kraftfahrzeug 303 und der Parkplatz 301 sowohl über WLAN als auch über Mobilfunk miteinander kommunizieren können. So kommuniziert die erste Kommunikationseinrichtung 307 des Kraftfahrzeugs 303 über WLAN mit der ersten Kommunikationseinrichtung 315 des Parkplatzes. Die zweite Kommunikationseinrichtung 309 des Kraftfahrzeugs 303 kommuniziert über Mobilfunk mit der zweiten Kommunikationseinrichtung 317 des Parkplatzes 301.

Somit sind also zwei Kommunikationskanäle geschaffen, die insofern eine Redundanz gewährleisten. Es ist vorgesehen, dass einer der beiden Kommunikationskanäle ein Hauptkommunikationskanal ist. Erfindungsgemäß ist vorgesehen, dass der andere Kommunikationskanal nur dann verwendet wird, wenn der Hauptkommunikationskanal ausfällt oder gestört ist. Ein Ausfall und eine Störung kann zum Beispiel ein Ausfall oder eine Fehlfunktion in einer der entsprechenden Kommunikationseinrichtungen zur Ursache haben.

In einem solchen Fall schaltet dann die entsprechende Steuerungseinrichtung die Kommunikation vom Hauptkommunikationskanal auf den anderen Kommunikationskanal um.

Somit ist nach einer allgemeinen Ausführungsform vorgesehen, dass die Steuerungseinrichtung (des Kraftfahrzeugs respektive des Parkplatzes) ausgebildet ist, im Fehlerfall eine Kommunikation, die mittels einer der beiden Kommunikationseinrichtungen durchgeführt wird, auf die andere der beiden Kommunikationseinrichtungen umzuschalten, so dass die Kommunikation mittels der anderen der beiden Kommunikationseinrichtungen fortgesetzt werden kann.

Ein Fehlerfall umfasst zum Beispiel: Einen Ausfall und/oder eine Störung in der Kommunikation, die zum Beispiel ein Ausfall oder eine Fehlfunktion in einer der entsprechenden Kommunikationseinrichtungen zur Ursache haben kann respektive können.

Die Erfindung stellt also insbesondere ein effizientes technisches Konzept bereit, welches ein Problem in einer Kommunikation im Rahmen eines automatischen Parkvorgangs lösen respektive aufheben kann. Ein erfindungsgemäßer Grundgedanke ist insbesondere in der Verwendung einer redundanten Kommunikationsart im Fehlerfall zu sehen. Das heißt also, dass es eine Hauptkommunikationsart gibt, Wifi/WLAN, und, dass es eine zweite Kommunikationsart gibt, die im Fehlerfall der ersten Kommunikationsart eingesetzt wird. Vorliegend wird also über Mobilfunk kommuniziert, wenn in der WLAN-Kommunikation ein Fehler vorliegen sollte.

Erfindungsgemäß sind die Kommunikationsarten, also die Kommunikationsnetzwerke verschieden. So ist eines der drahtlosen Kommunikationsnetzwerke ein Wifi/WLAN-Netzwerk. Das andere Kommunikationsnetzwerk ist ein Mobilfunckommunikationsnetzwerk.

Nach einer Ausführungsform sind zwecks Redundanz in der entsprechenden Kommunikationseinrichtung mindestens zwei verschiedene Sender und mindestens zwei verschiedene Empfänger vorgesehen. Das heißt also, dass die Kommunikationseinrichtung (die erste respektive die zweite) jeweils mindestens zwei Sender und jeweils mindestens zwei Empfänger aufweist respektive aufweisen. Auch auf diese Art und Weise kann dann eine Redundanz gewährleistet werden.

Vorzugsweise sind die Kommunikationsarten und auch in der Hardware und/oder Software redundant. Das heißt also, dass es zum Beispiel zwei verschiedene Kommunikationsmodule im Fahrzeug (getrennte Kommunikationsgeräte) und in der Infrastruktur, also innerhalb des Parkplatzes, gibt. Das heißt also, dass in einer weiteren Ausführungsform die Kommunikationsarten in der Hardware und Software auf beiden Seiten (Kraftfahrzeug und Parkplatz) getrennt sind.

In einer Ausführungsform ist vorgesehen, dass die beiden Kommunikationseinrichtungen von einem gemeinsamen Kommunikationsgerät umfasst sind. In diesem Fall ist nach einer Ausführungsform das gemeinsame Kommunikationsgerät derart ausgebildet, dass bei einem Fehler (zum Beispiel kein Strom und/oder kein Empfang) in einer der Kommunikationseinrichtungen die andere Kommunikationseinrichtung weiter funktionieren kann respektive funktioniert.

Nach einer Ausführungsform sind die Kommunikationseinrichtungen jeweils in bereits im Kraftfahrzeug vorhandenen Systemen oder Geräten integriert. Zum Beispiel kann eine der Kommunikationseinrichtungen in der Haupteinheit (auch Head Unit genannt) integriert sein. Zum Beispiel ist dann die andere Kommunikationseinrichtung in dem Fahrzeugmodul zur Durchführung eines automatischen Parkvorgangs integriert. Ein solches Fahrzeugmodul kann auch als ein "AVP-Funktionsmodul" bezeichnet werden.

Der erfindungsgemäße Vorteil ist insbesondere in einer robusten und stabilen Kommunikation zwischen Parkplatz und Kraftfahrzeug zu sehen.

Nach einer Ausführungsform umfasst der Parkplatz einen Parkplatzverwaltungsserver, der ausgebildet ist, einen automatischen Parkvorgang zu steuern und/oder zu koordinieren. Die hierfür notwendigen Daten werden dem Kraftfahrzeug über das redundant ausgebildete Kommunikationssystem zur Verfügung gestellt.

## Patentansprüche

1. Kraftfahrzeug (101, 303), umfassend:
- ein redundant ausgebildetes Kommunikationssystem (103, 305), das
- eine erste Kommunikationseinrichtung (105, 307) zum Kommunizieren über ein erstes drahtloses Kommunikationsnetzwerk, welches ein WLAN-Kommunikationsnetzwerk ist, mit einer ersten Kommunikationseinrichtung (205, 315) eines redundant ausgebildeten Kommunikationssystems (203, 313) eines Parkplatzes (201, 301),
- eine zweite Kommunikationseinrichtung (107, 309) zum Kommunizieren über ein zweites drahtloses Kommunikationsnetzwerk, welches ein Mobilfunkkommunikationsnetzwerk ist, mit einer zweiten Kommunikationseinrichtung (207, 317) des redundant ausgebildeten Kommunikationssystems (203, 313) des Parkplatzes (201, 301), sodass das Kraftfahrzeug (101, 303) und der Parkplatz (201, 301) sowohl über WLAN als auch über Mobilfunk kommunizieren können, wobei der Parkplatz (201, 301) eine Steuerungseinrichtung (209, 319) zum redundanten Betreiben der ersten Kommunikationseinrichtung (205, 315) und der zweiten Kommunikationseinrichtung (207, 317) des redundant ausgebildeten Kommunikationssystems des Parkplatzes (201, 301) aufweist, und
- eine Steuerungseinrichtung (109, 311) zum redundanten Betreiben der ersten Kommunikationseinrichtung (105, 307) und der zweiten Kommunikationseinrichtung (107, 309) aufweist, so dass zwei Kommunikationskanäle geschaffen sind, wobei
- einer der beiden Kommunikationskanäle ein Hauptkommunikationskanal ist, so dass der andere Kommunikationskanal nur dann verwendet wird, wenn der Hauptkanal ausfällt oder gestört ist, wobei der Hauptkommunikationskanal ein WLAN-Kommunikationskanal ist und der andere Kommunikationskanal ein Mobilfunk-Kommunikationskanal ist, und
- wobei die Steuerungseinrichtung ausgebildet ist, im Fehlerfall eine Kommunikation, die mittels einer der beiden Kommunikationseinrichtungen durchgeführt wird, auf die andere der beiden Kommunikationseinrichtungen umzuschalten, so dass die Kommunikation mittels der anderen der beiden Kommunikationseinrichtungen fortgesetzt werden kann.

2. Kraftfahrzeug (101, 303) nach Anspruch 1, wobei die erste Kommunikationseinrichtung (105, 307) und die zweite Kommunikationseinrichtung (107, 309) als voneinander getrennte Kommunikationsgeräte ausgebildet sind.

3. Kraftfahrzeug (101, 303) nach Anspruch 2, wobei eine der beiden Kommunikationseinrichtungen von einer Haupteinheit eines Infotainmentsystems umfasst ist.

4. Kraftfahrzeug (101, 303) nach Anspruch 2 oder 3, wobei eine der beiden Kommunikationseinrichtungen von einem Fahrzeugmodul zur Durchführung eines automatischen Parkvorgangs umfasst ist.

5. Kraftfahrzeug (101, 303) nach Anspruch 1, wobei die erste Kommunikationseinrichtung (105, 307) und die zweite Kommunikationseinrichtung (107, 309) von einem gemeinsamen Kommunikationsgerät umfasst sind.

6. Parkplatz (201, 301) für Kraftfahrzeuge (101, 303), umfassend:
- ein redundant ausgebildetes Kommunikationssystem (203, 313), das
- eine erste Kommunikationseinrichtung (205, 315) zum Kommunizieren über ein erstes drahtloses Kommunikationsnetzwerk, welches ein WLAN-Kommunikationsnetzwerk ist, mit einer ersten Kommunikationseinrichtung (105, 307) eines redundant ausgebildeten Kommunikationssystems (103, 305) eines Kraftfahrzeugs (101, 303),
- eine zweite Kommunikationseinrichtung (207, 317) zum Kommunizieren über ein zweites drahtloses Kommunikationsnetzwerk, welches ein Mobilfunkkommunikationsnetzwerk ist, mit einer zweiten Kommunikationseinrichtung (107, 309) des redundant ausgebildeten Kommunikationssystems (103, 305) des Kraftfahrzeugs (101, 303), sodass das Kraftfahrzeug (101, 303) und der Parkplatz (201, 301) sowohl über WLAN als auch über Mobilfunk kommunizieren können, wobei das Kraftfahrzeug (101, 303) eine Steuerungseinrichtung (109, 311) zum redundanten Betreiben der ersten Kommunikationseinrichtung (105, 307) und der zweiten Kommunikationseinrichtung (107, 309) des redundant ausgebildeten Kommunikationssystems (103, 305) des Kraftfahrzeugs (101, 303) aufweist, und
- eine Steuerungseinrichtung (209, 319) zum redundanten Betreiben der ersten Kommunikationseinrichtung (205, 315) und der zweiten Kommunikationseinrichtung (207, 317) aufweist, so dass zwei Kommunikationskanäle geschaffen sind, wobei
- einer der beiden Kommunikationskanäle ein Hauptkommunikationskanal ist, so dass der andere Kommunikationskanal nur dann verwendet wird, wenn der Hauptkanal ausfällt oder gestört ist, wobei der Hauptkommunikationskanal ein WLAN-Kommunikationskanal ist und der andere Kommunikationskanal ein Mobilfunk-Kommunikationskanal ist, und
- wobei die Steuerungseinrichtung ausgebildet ist, im Fehlerfall eine Kommunikation, die mittels einer der beiden Kommunikationseinrichtungen durchgeführt wird, auf die andere der beiden Kommunikationseinrichtungen umzuschalten, so dass die Kommunikation mittels der anderen der beiden Kommunikationseinrichtungen fortgesetzt werden kann,

7. Parkplatz (201, 301) nach Anspruch 6, wobei die erste Kommunikationseinrichtung (205, 315) und die zweite Kommunikationseinrichtung (207, 317) jeweils mehrere innerhalb des Parkplatzes räumlich verteilte Transceivereinheiten umfassen.

8. Parkplatz (201, 301) nach Anspruch 6 oder 7, wobei die jeweiligen Transceivereinheiten der ersten Kommunikationseinrichtung (205, 315) und der zweiten Kommunikationseinrichtung (207, 317) zumindest teilweise jeweils als von einander getrennte Kommunikationsgeräte ausgebildet sind.

9. Parkplatz (201, 301) nach einem der Ansprüche 6 bis 8, wobei die jeweiligen Transceivereinheiten der ersten Kommunikationseinrichtung (205, 315) und der zweiten Kommunikationseinrichtung (207, 317) zumindest teilweise jeweils als ein gemeinsames Kommunikationsgerät ausgebildet sind.

10. Kommunikationssystem (103, 305) für ein Kraftfahrzeug (101, 303) nach einem der Ansprüche 1 bis 5, umfassend:
- eine erste Kommunikationseinrichtung (105, 307) zum Kommunizieren über ein erstes drahtloses Kommunikationsnetzwerk, welches ein WLAN-Kommunikationsnetzwerk ist, mit einer ersten Kommunikationseinrichtung (205, 315) eines redundant ausgebildeten Kommunikationssystems (203, 313) eines Parkplatzes (201, 301),
- eine zweite Kommunikationseinrichtung (107, 309) zum Kommunizieren über ein zweites drahtloses Kommunikationsnetzwerk, welches ein Mobilfunkkommunikationsnetzwerk ist, mit einer zweiten Kommunikationseinrichtung (207, 317) des redundant ausgebildeten Kommunikationssystems (203, 313) des Parkplatzes (201, 301), sodass das Kraftfahrzeug (101, 303) und der Parkplatz (201, 301) sowohl über WLAN als auch über Mobilfunk kommunizieren können, wobei der Parkplatz (201, 301) eine Steuerungseinrichtung (209, 319) zum redundanten Betreiben der ersten Kommunikationseinrichtung (205, 315) und der zweiten Kommunikationseinrichtung (207, 317) des redundant ausgebildeten Kommunikationssystems des Parkplatzes (201, 301), und
- eine Steuerungseinrichtung (109, 311) zum redundanten Betreiben der ersten Kommunikationseinrichtung (105, 307) und der zweiten Kommunikationseinrichtung (107, 309) aufweist, so dass zwei Kommunikationskanäle geschaffen sind, wobei
- einer der beiden Kommunikationskanäle ein Hauptkommunikationskanal ist, so dass der andere Kommunikationskanal nur dann verwendet wird, wenn der Hauptkanal ausfällt oder gestört ist, wobei der Hauptkommunikationskanal ein WLAN-Kommunikationskanal ist und der andere Kommunikationskanal ein Mobilfunk-Kommunikationskanal ist, und wobei die Steuerungseinrichtung (109, 311) ausgebildet ist, im Fehlerfall eine Kommunikation, die mittels einer der beiden Kommunikationseinrichtungen über den Hauptkommunikationskanal durchgeführt wird, auf die andere der beiden Kommunikationseinrichtungen umzuschalten, so dass die Kommunikation mittels der anderen der beiden Kommunikationseinrichtungen über den anderen Kommunikationskanal fortgesetzt werden kann.

11. Kommunikationssystem (203, 313) für einen Parkplatz (201, 301) nach einem der Ansprüche 6 bis 9, umfassend:
- eine erste Kommunikationseinrichtung (205, 315) zum Kommunizieren über ein erstes drahtloses Kommunikationsnetzwerk, welches ein WLAN-Kommunikationsnetzwerk ist, mit einer ersten Kommunikationseinrichtung (105, 307) eines redundant ausgebildeten Kommunikationssystems (103, 305) eines Kraftfahrzeugs (101, 303),
- eine zweite Kommunikationseinrichtung (207, 317) zum Kommunizieren über ein zweites drahtloses Kommunikationsnetzwerk, welches ein Mobilfunkkommunikationsnetzwerk ist, mit einer zweiten Kommunikationseinrichtung (107, 309) des redundant ausgebildeten Kommunikationssystems (103, 305) des Kraftfahrzeugs (101, 303), sodass das Kraftfahrzeug (101, 303) und der Parkplatz (201, 301) sowohl über WLAN als auch über Mobilfunk kommunizieren können, wobei das Kraftfahrzeug (101, 303) eine Steuerungseinrichtung (109, 311) zum redundanten Betreiben der ersten Kommunikationseinrichtung (105, 307) und der zweiten Kommunikationseinrichtung (107, 309) des redundant ausgebildeten Kommunikationssystems (103, 305) des Kraftfahrzeugs (101, 303) aufweist, und
- eine Steuerungseinrichtung (209, 319) zum redundanten Betreiben der ersten Kommunikationseinrichtung (205, 315) und der zweiten Kommunikationseinrichtung (207, 317) aufweist, so dass zwei Kommunikationskanäle geschaffen sind, wobei
- einer der beiden Kommunikationskanäle ein Hauptkommunikationskanal ist, so dass der andere Kommunikationskanal nur dann verwendet wird, wenn der Hauptkanal ausfällt oder gestört ist, wobei der Hauptkommunikationskanal ein WLAN-Kommunikationskanal ist und der andere Kommunikationskanal ein Mobilfunk-Kommunikationskanal ist, und
- wobei die Steuerungseinrichtung (209, 319) ausgebildet ist, im Fehlerfall eine Kommunikation, die mittels einer der beiden Kommunikationseinrichtungen über den Hauptkommunikationskanal durchgeführt wird, auf die andere der beiden Kommunikationseinrichtungen umzuschalten, so dass die Kommunikation mittels der anderen der beiden Kommunikationseinrichtungen über den anderen Kommunikationskanal fortgesetzt werden kann.

## Claims

1. Motor vehicle (101, 303) comprising:
- a redundantly designed communication system (103, 305) which has
- a first communication device (105, 307) for communicating with a first communication device (205, 315) of a redundantly designed communication system (203, 313) of a parking area (201, 301) via a first wireless communication network which is a WLAN communication network,
- a second communication device (107, 309) for communicating with a second communication device (207, 317) of the redundantly designed communication system (203, 313) of the parking area (201, 301) via a second wireless communication network which is a mobile radio communication network, with the result that the motor vehicle (101, 303) and the parking area (201, 301) can communicate both via WLAN and via mobile radio, wherein the parking area (201, 301) has a control device (209, 319) for redundantly operating the first communication device (205, 315) and the second communication device (207, 317) of the redundantly designed communication system of the parking area (201, 301), and
- a control device (109, 311) for redundantly operating the first communication device (105, 307) and the second communication device (107, 309), with the result that two communication channels are created, wherein
- one of the two communication channels is a main communication channel, with the result that the other communication channel is used only when the main channel fails or is disrupted, wherein the main communication channel is a WLAN communication channel and the other communication channel is a mobile radio communication channel, and
- wherein the control device is designed, in the event of a fault, to change over communication, which is carried out by means of one of the two communication devices, to the other one of the two communication devices, with the result that communication can be continued by means of the other one of the two communication devices.

2. Motor vehicle (101, 303) according to Claim 1, wherein the first communication device (105, 307) and the second communication device (107, 309) are in the form of communication apparatuses which are separate from one another.

3. Motor vehicle (101, 303) according to Claim 2, wherein one of the two communication devices is included in a main unit of an infotainment system.

4. Motor vehicle (101, 303) according to Claim 2 or 3, wherein one of the two communication devices is included in a vehicle module for carrying out an automatic parking process.

5. Motor vehicle (101, 303) according to Claim 1, wherein the first communication device (105, 307) and the second communication device (107, 309) are included in a common communication apparatus.

6. Parking area (201, 301) for motor vehicles (101, 303), comprising:
- a redundantly designed communication system (203, 313) which has
- a first communication device (205, 315) for communicating with a first communication device (105, 307) of a redundantly designed communication system (103, 305) of a motor vehicle (101, 303) via a first wireless communication network which is a WLAN communication network,
- a second communication device (207, 317) for communicating with a second communication device (107, 309) of the redundantly designed communication system (103, 305) of the motor vehicle (101, 303) via a second wireless communication network which is a mobile radio communication network, with the result that the motor vehicle (101, 303) and the parking area (201, 301) can communicate both via WLAN and via mobile radio, wherein the motor vehicle (101, 303) has a control device (109, 311) for redundantly operating the first communication device (105, 307) and the second communication device (107, 309) of the redundantly designed communication system (103, 305) of the motor vehicle (101, 303), and
- a control device (209, 319) for redundantly operating the first communication device (205, 315) and the second communication device (207, 317), with the result that two communication channels are created, wherein
- one of the two communication channels is a main communication channel, with the result that the other communication channel is used only when the main channel fails or is disrupted, wherein the main communication channel is a WLAN communication channel and the other communication channel is a mobile radio communication channel, and
- wherein the control device is designed, in the event of a fault, to change over communication, which is carried out by means of one of the two communication devices, to the other one of the two communication devices, with the result that communication can be continued by means of the other one of the two communication devices.

7. Parking area (201, 301) according to Claim 6, wherein the first communication device (205, 315) and the second communication device (207, 317) each comprise a plurality of transceiver units spatially distributed within the parking area.

8. Parking area (201, 301) according to Claim 6 or 7, wherein the respective transceiver units of the first communication device (205, 315) and of the second communication device (207, 317) are each at least partially in the form of communication apparatuses which are separate from one another.

9. Parking area (201, 301) according to one of Claims 6 to 8, wherein the respective transceiver units of the first communication device (205, 315) and of the second communication device (207, 317) are each at least partially in the form of a common communication apparatus.

10. Communication system (103, 305) for a motor vehicle (101, 303) according to one of Claims 1 to 5, comprising:
- a first communication device (105, 307) for communicating with a first communication device (205, 315) of a redundantly designed communication system (203, 313) of a parking area (201, 301) via a first wireless communication network which is a WLAN communication network,
- a second communication device (107, 309) for communicating with a second communication device (207, 317) of the redundantly designed communication system (203, 313) of the parking area (201, 301) via a second wireless communication network which is a mobile radio communication network, with the result that the motor vehicle (101, 303) and the parking area (201, 301) can communicate both via WLAN and via mobile radio, wherein the parking area (201, 301) has a control device (209, 319) for redundantly operating the first communication device (205, 315) and the second communication device (207, 317) of the redundantly designed communication system of the parking area (201, 301), and
- a control device (109, 311) for redundantly operating the first communication device (105, 307) and the second communication device (107, 309), with the result that two communication channels are created, wherein
- one of the two communication channels is a main communication channel, with the result that the other communication channel is used only when the main channel fails or is disrupted, wherein the main communication channel is a WLAN communication channel and the other communication channel is a mobile radio communication channel, and
wherein the control device (109, 311) is designed, in the event of a fault, to change over communication, which is carried out by means of one of the two communication devices via the main communication channel, to the other one of the two communication devices, with the result that communication can be continued by means of the other one of the two communication devices via the other communication channel.

11. Communication system (203, 313) for a parking area (201, 301) according to one of Claims 6 to 9, comprising:
- a first communication device (205, 315) for communicating with a first communication device (105, 307) of a redundantly designed communication system (103, 305) of a motor vehicle (101, 303) via a first wireless communication network which is a WLAN communication network,
- a second communication device (207, 317) for communicating with a second communication device (107, 309) of the redundantly designed communication system (103, 305) of the motor vehicle (101, 303) via a second wireless communication network which is a mobile radio communication network, with the result that the motor vehicle (101, 303) and the parking area (201, 301) can communicate both via WLAN and via mobile radio, wherein the motor vehicle (101, 303) has a control device (109, 311) for redundantly operating the first communication device (105, 307) and the second communication device (107, 309) of the redundantly designed communication system (103, 305) of the motor vehicle (101, 303), and
- a control device (209, 319) for redundantly operating the first communication device (205, 315) and the second communication device (207, 317), with the result that two communication channels are created, wherein
- one of the two communication channels is a main communication channel, with the result that the other communication channel is used only when the main channel fails or is disrupted, wherein the main communication channel is a WLAN communication channel and the other communication channel is a mobile radio communication channel, and
- wherein the control device (209, 319) is designed, in the event of a fault, to change over communication, which is carried out by means of one of the two communication devices via the main communication channel, to the other one of the two communication devices, with the result that communication can be continued by means of the other one of the two communication devices via the other communication channel.

## Revendications

1. Véhicule automobile (101, 303), comprenant :
- un système de communication (103, 305) configuré redondant, lequel possède
- un premier dispositif de communication (105, 307) destiné à communiquer par le biais d'un premier réseau de communication sans fil, qui est un réseau de communication WLAN, avec un premier dispositif de communication (205, 315) d'un système de communication (203, 313) configuré redondant d'un espace de stationnement (201, 301),
- un deuxième dispositif de communication (107, 309) destiné à communiquer par le biais d'un deuxième réseau de communication sans fil, qui est un réseau de radiocommunication mobile, avec un deuxième dispositif de communication (207, 317) du système de communication (203, 313) configuré redondant de l'espace de stationnement (201, 301), de sorte que le véhicule automobile (101, 303) et l'espace de stationnement (201, 301) puissent communiquer à la fois par le biais du WLAN et par le biais de la radio mobile, l'espace de stationnement (201, 301) possédant un dispositif de commande (209, 319) destiné à faire fonctionner de manière redondante le premier dispositif de communication (205, 315) et le deuxième dispositif de communication (207, 317) du système de communication configuré redondant de l'espace de stationnement (201, 301), et
- un dispositif de commande (109, 311) destiné à faire fonctionner de manière redondante le premier dispositif de communication (105, 307) et le deuxième dispositif de communication (107, 309), de sorte que deux canaux de communication soient réalisés,
- l'un des deux canaux de communication étant un canal de communication principal, de sorte que l'autre canal de communication n'est utilisé que lorsque le canal principal tombe en panne ou est en dérangement, le canal de communication principal étant un canal de communication WLAN et 1'autre canal de communication étant un canal de radiocommunication mobile, et
- le dispositif de commande étant configuré pour, en cas de défaut, permuter une communication, qui est menée au moyen de l'un des deux dispositifs de communication, sur l'autre des deux dispositifs de communication, de sorte que la communication puisse être poursuivie au moyen de l'autre des deux dispositifs de communication.

2. Véhicule automobile (101, 303) selon la revendication 1, le premier dispositif de communication (105, 307) et le deuxième dispositif de communication (107, 309) étant réalisés sous la forme d'appareils de communication séparés l'un de l'autre.

3. Véhicule automobile (101, 303) selon la revendication 2, l'un des deux dispositifs de communication étant compris dans une unité principale d'un système d'infodivertissement.

4. Véhicule automobile (101, 303) selon la revendication 2 ou 3, l'un des deux dispositifs de communication étant compris dans un module de véhicule destiné à effectuer une opération de stationnement automatique.

5. Véhicule automobile (101, 303) selon la revendication 1, le premier dispositif de communication (105, 307) et le deuxième dispositif de communication (107, 309) étant compris dans un appareil de communication commun.

6. Espace de stationnement (201, 301) pour véhicules automobiles (101, 303), comprenant :
- un système de communication (203, 313) configuré redondant, lequel possède
- un premier dispositif de communication (205, 315) destiné à communiquer par le biais d'un premier réseau de communication sans fil, qui est un réseau de communication WLAN, avec un premier dispositif de communication (105, 307) d'un système de communication (103, 305) configuré redondant d'un véhicule automobile (101, 303),
- un deuxième dispositif de communication (207, 317) destiné à communiquer par le biais d'un deuxième réseau de communication sans fil, qui est un réseau de radiocommunication mobile, avec un deuxième dispositif de communication (107, 309) du système de communication (103, 305) configuré redondant du véhicule automobile (101, 303), de sorte que le véhicule automobile (101, 303) et l'espace de stationnement (201, 301) puissent communiquer à la fois par le biais du WLAN et par le biais de la radio mobile, le véhicule automobile (101, 303) possédant un dispositif de commande (109, 311) destiné à faire fonctionner de manière redondante le premier dispositif de communication (105, 307) et le deuxième dispositif de communication (107, 309) du système de communication (103, 305) configuré redondant du véhicule automobile (101, 303), et
- un dispositif de commande (209, 319) destiné à faire fonctionner de manière redondante le premier dispositif de communication (205, 315) et le deuxième dispositif de communication (207, 317), de sorte que deux canaux de communication soient réalisés,
- l'un des deux canaux de communication étant un canal de communication principal, de sorte que l'autre canal de communication n'est utilisé que lorsque le canal principal tombe en panne ou est en dérangement, le canal de communication principal étant un canal de communication WLAN et l'autre canal de communication étant un canal de radiocommunication mobile, et
- le dispositif de commande étant configuré pour, en cas de défaut, permuter une communication, qui est menée au moyen de l'un des deux dispositifs de communication, sur l'autre des deux dispositifs de communication, de sorte que la communication puisse être poursuivie au moyen de l'autre des deux dispositifs de communication.

7. Espace de stationnement (201, 301) selon la revendication 6, le premier dispositif de communication (205, 315) et le deuxième dispositif de communication (207, 317) comportant respectivement plusieurs unités d'émission-réception distribuées dans l'espace à l'intérieur de l'espace de stationnement.

8. Espace de stationnement (201, 301) selon la revendication 6 ou 7, les unités d'émission-réception respectives du premier dispositif de communication (205, 315) et du deuxième dispositif de communication (207, 317) étant au moins partiellement réalisées respectivement sous la forme d'appareils de communication séparés l'un de l'autre.

9. Espace de stationnement (201, 301) selon l'une des revendications 6 à 8, les unités d'émission-réception respectives du premier dispositif de communication (205, 315) et du deuxième dispositif de communication (207, 317) étant au moins partiellement réalisées respectivement sous la forme d'un appareil de communication commun.

10. Système de communication (103, 305) pour un véhicule automobile (101, 303) selon l'une des revendications 1 à 5, comprenant :
- un premier dispositif de communication (105, 307) destiné à communiquer par le biais d'un premier réseau de communication sans fil, qui est un réseau de communication WLAN, avec un premier dispositif de communication (205, 315) d'un système de communication (203, 313) configuré redondant d'un espace de stationnement (201, 301),
- un deuxième dispositif de communication (107, 309) destiné à communiquer par le biais d'un deuxième réseau de communication sans fil, qui est un réseau de radiocommunication mobile, avec un deuxième dispositif de communication (207, 317) du système de communication (203, 313) configuré redondant de l'espace de stationnement (201, 301), de sorte que le véhicule automobile (101, 303) et l'espace de stationnement (201, 301) puissent communiquer à la fois par le biais du WLAN et par le biais de la radio mobile, l'espace de stationnement (201, 301) possédant un dispositif de commande (209, 319) destiné à faire fonctionner de manière redondante le premier dispositif de communication (205, 315) et le deuxième dispositif de communication (207, 317) du système de communication configuré redondant de l'espace de stationnement (201, 301), et
- un dispositif de commande (109, 311) destiné à faire fonctionner de manière redondante le premier dispositif de communication (105, 307) et le deuxième dispositif de communication (107, 309), de sorte que deux canaux de communication soient réalisés,
- l'un des deux canaux de communication étant un canal de communication principal, de sorte que l'autre canal de communication n'est utilisé que lorsque le canal principal tombe en panne ou est en dérangement, le canal de communication principal étant un canal de communication WLAN et l'autre canal de communication étant un canal de radiocommunication mobile, et le dispositif de commande (109, 311) étant configuré pour, en cas de défaut, permuter une communication, qui est menée au moyen de l'un des deux dispositifs de communication par le biais du canal de communication principal, sur l'autre des deux dispositifs de communication, de sorte que la communication puisse être poursuivie au moyen de l'autre des deux dispositifs de communication par le biais de l'autre canal de communication.

11. Système de communication (203, 313) pour un espace de stationnement (201, 301) selon l'une des revendications 6 à 9, comprenant :
- un premier dispositif de communication (205, 315) destiné à communiquer par le biais d'un premier réseau de communication sans fil, qui est un réseau de communication WLAN, avec un premier dispositif de communication (105, 307) d'un système de communication (103, 305) configuré redondant d'un véhicule automobile (101, 303),
- un deuxième dispositif de communication (207, 317) destiné à communiquer par le biais d'un deuxième réseau de communication sans fil, qui est un réseau de radiocommunication mobile, avec un deuxième dispositif de communication (107, 309) du système de communication (103, 305) configuré redondant du véhicule automobile (101, 303), de sorte que le véhicule automobile (101, 303) et l'espace de stationnement (201, 301) puissent communiquer à la fois par le biais du WLAN et par le biais de la radio mobile, le véhicule automobile (101, 303) possédant un dispositif de commande (109, 311) destiné à faire fonctionner de manière redondante le premier dispositif de communication (105, 307) et le deuxième dispositif de communication (107, 309) du système de communication (103, 305) configuré redondant du véhicule automobile (101, 303), et
- un dispositif de commande (209, 319) destiné à faire fonctionner de manière redondante le premier dispositif de communication (205, 315) et le deuxième dispositif de communication (207, 317), de sorte que deux canaux de communication soient réalisés,
- l'un des deux canaux de communication étant un canal de communication principal, de sorte que l'autre canal de communication n'est utilisé que lorsque le canal principal tombe en panne ou est en dérangement, le canal de communication principal étant un canal de communication WLAN et l'autre canal de communication étant un canal de radiocommunication mobile, et
- le dispositif de commande (209, 319) étant configuré pour, en cas de défaut, permuter une communication, qui est menée au moyen de l'un des deux dispositifs de communication par le biais du canal de communication principal, sur l'autre des deux dispositifs de communication, de sorte que la communication puisse être poursuivie au moyen de l'autre des deux dispositifs de communication par le biais de l'autre canal de communication.
